(19) Europäisches Patentamt
European Patent Office
Office européen des brevets

(11) **EP 3 876 417 A1**

(12) **EUROPEAN PATENT APPLICATION**
published in accordance with Art. 153(4) EPC

(43) Date of publication:
**08.09.2021 Bulletin 2021/36**

(51) Int Cl.:
**H02P 6/16** *(2016.01)*

(21) Application number: **19880078.1**

(22) Date of filing: **24.10.2019**

(86) International application number:
**PCT/JP2019/041598**

(87) International publication number:
**WO 2020/090596 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2018 JP 2018203233**

(71) Applicant: **Nidec Corporation
Minami-ku, Kyoto-shi,
Kyoto 601-8205 (JP)**

(72) Inventors:
• **ISHIGAMI, Shota**
**Kyoto-shi, Kyoto 601-8205 (JP)**
• **FUJITA, Atsushi**
**Kyoto-shi, Kyoto 601-8205 (JP)**
• **TOKUNAGA, Tomohisa**
**Kyoto-shi, Kyoto 601-8205 (JP)**

(74) Representative: **Viering, Jentschura & Partner mbB
Patent- und Rechtsanwälte
Am Brauhaus 8
01099 Dresden (DE)**

(54) **LOCATION ESTIMATION DEVICE AND LOCATION ESTIMATION METHOD**

(57) A position estimation device (4) acquires detection values of a magnetic field strength at three or more places of a rotor in accordance with a rotor angle in a range where the rotor angle is less than one rotation. A feature amount calculation unit (412) is provided for calculating a plurality of feature amounts of a waveform of the magnetic field strength based on the detection values of the magnetic field strength. An estimation unit (413) is provided for determining, for each pole pair number of the rotor (21), whether or not a pattern of a magnitude relationship of the plurality of feature amounts learned in advance coincides with a pattern of a magnitude relationship of the plurality of feature amounts calculated, and estimating, as a rotation position of the rotor, the pole pair number with which a pattern of the magnitude relationship coincides.

FIG. 1

## Description

Field of the Invention

The present disclosure relates to a position estimation device and a position estimation method.

Description of the Related Art

Conventionally, a method of estimating the rotation position of the rotor of a motor using a position sensor such as an optical encoder has been known, but a method of estimating the rotation position of the rotor of a motor without using a position sensor has been required for the purpose of miniaturization and cost reduction of the motor. Japanese Patent No. 6233532 discloses a method of estimating the rotational position of the rotor of a motor without using a position sensor.

Patent documents : Japanese Patent No. 6233532

However, when the rotation position of the rotor is estimated without using a position sensor, there have been cases where the rotation position of the rotor cannot be estimated in a range where the rotor angle is less than one rotation.

In view of the above circumstances, it is an object of the present invention to provide a position estimation device and a position estimation method capable of estimating the rotation position of the rotor even when the rotor angle is less than one rotation.

SUMMARY OF THE INVENTION

One aspect of the present disclosure acquires detection values of a magnetic field strength at three or more places of the rotor in accordance with the rotor angle in a range where the rotor angle is less than one rotation. A feature amount calculation unit is provided for calculating a plurality of feature amounts of a waveform of the magnetic field strength based on the detection values of the magnetic field strength. A position estimation device includes an estimation unit that determines, for each pole pair number of the rotor, whether or not a pattern of a magnitude relationship of the plurality of feature amounts learned in advance coincides with a pattern of a magnitude relationship of the plurality of feature amounts calculated, and estimates, as a rotation position of the rotor, the pole pair number with which a pattern of the magnitude relationship coincides.

One aspect of the present disclosure is a position estimation method executed by a position estimation device that acquires detection values of a magnetic field strength at three or more places of the rotor in accordance with the rotor angle in a range where the rotor angle is less than one rotation. A step of calculating a plurality of feature amounts of the waveform of the magnetic field strength based on the detection values of the magnetic field strength is provided. The position estimation method includes a step of determines, for each pole pair number of the rotor, whether or not a pattern of a magnitude relationship of the plurality of feature amounts learned in advance coincides with a pattern of a magnitude relationship of the plurality of feature amounts calculated, and estimating, as a rotation position of the rotor, the pole pair number with which a pattern of the magnitude relationship coincides.

According to the present invention, it is possible to estimate the rotation position of the rotor even when the rotor angle is less than one rotation.

BRIEF DESCRIPTION OF THE DRAWINGS

FIG. 1 is a view showing an example of a configuration of a motor unit in a first embodiment.
FIG. 2 is a view showing an example of a correspondence relationship between a pole pair number, a section, and a segment in the first embodiment.
FIG. 3 is a view showing an example of a learning value of a waveform of a magnetic field strength in the first embodiment.
FIG. 4 is a view showing an example of a learning value of a corrected waveform in the first embodiment.
FIG. 5 is a view showing an example of a feature point of the corrected waveform in the first embodiment.
FIG. 6 is a flowchart showing an example of calculation processing of an intersection point in the first embodiment.
FIG. 7 is a flowchart showing an example of magnitude comparison processing in the first embodiment.
FIG. 8 is a flowchart showing an example of calculation processing of a pole pair number in the first embodiment.
FIG. 9 is a view showing an example of a configuration of a motor unit in a second embodiment.
FIG. 10 is a view showing an example of a detection value of a feature point of a waveform in the second embodiment.
FIG. 11 is a view showing an example of a learning value of a maximum value and a minimum value of a waveform in the second embodiment.

FIG. 12 is a view showing an example of a learning value of an intersection point of a waveform in the second embodiment.

FIG. 13 is a flowchart showing an example of acquisition processing of a detection value in the second embodiment.

FIG. 14 is a flowchart showing an example of calculation processing of a pole pair number in the second embodiment.

FIG. 15 is a view showing an example of a detection value of a feature point of a waveform in a third embodiment.

DETAILED DESCRIPTION OF THE PREFERRED EMBODIMENTS

Embodiments of the present disclosure will be described in detail with reference to the drawings.

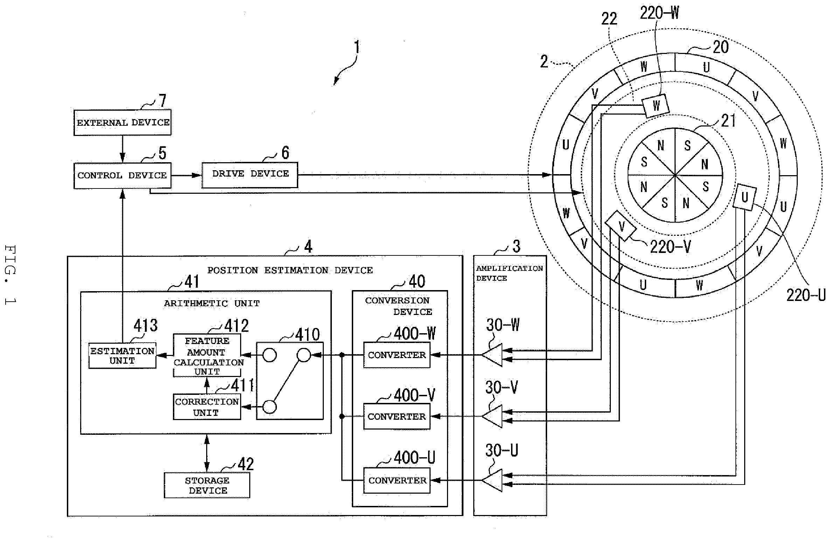

FIG. 1 is a view showing an example of the configuration of a motor unit 1. The motor unit 1 is a system that estimates the rotation position of a rotor of a motor. The motor unit 1 includes a motor 2, an amplification device 3, a position estimation device 4, a control device 5, and a drive device 6.

The motor 2 is an electric motor, for example, a brushless motor or a stepping motor. The motor 2 may be an inner rotor type motor or an outer rotor type motor. The motor 2 shown in FIG. 1 is, for example, an inner rotor type motor. The motor 2 includes a stator 20, a rotor 21, and a detection device 22.

The stator 20 includes a winding of plurality of slots of U-phase, V-phase, and W-phase. In FIG. 1, the stator 20 includes windings of a total of 12 slots, which are, a 4-slot U-phase winding, a 4-slot V-phase winding, and a 4-slot W-phase winding. A three-phase current whose phase is shifted by 120 degrees is input to the stator 20 from the drive device 6. The stator 20 generates a magnetic field at the positions of the rotor 21 and the detection device 22 by a three-phase current input to each winding of the U-phase, V-phase, and W-phase.

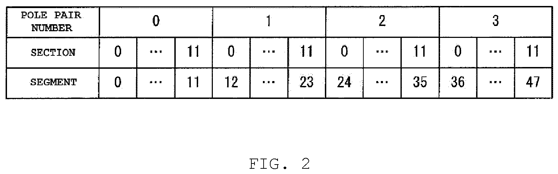

The rotor 21 rotates about the central axis by receiving the magnetic force of the stator 20. The rotor 21 includes one or more magnetic pole pairs (N pole and S pole). In FIG. 2, the rotor 21 includes, as an example, four sets of magnetic pole pairs. The rotor 21 rotates when the magnetic pole pair receives the magnetic force from the stator 20. A pole pair number is assigned to the magnetic pole pair. A section and a segment are associated with the pole pair number.

FIG. 2 is a view showing an example of the correspondence relationship between a pole pair number, a section, and a segment. A section number group is associated with the pole pair number. The number of section numbers is equal to the number of 12 logics including the magnitude relationship of output signals of three sensors 220 of the detection device 22 and the positive and negative (zero cross) of an intermediate signal. In FIG. 2, the pole pair number "0" is associated with section numbers from "0" to "11". The segment number is a unique number representing the absolute value of the mechanical angle of the rotor 21. For example, the section numbers "0" to "11" of the pole pair number "0" are associated with the segment numbers "0" to "11". For example, the section numbers "0" to "11" of the pole pair number "1" are associated with the segment numbers "12" to "23". A data table presenting the correspondence relationship shown in FIG. 2 is stored in advance in a storage device 42, for example.

The detection device 22 is a device that detects the magnetic field strength. The detection device 22 detects the magnetic field strength at three or more places in the vicinity of the rotor 21. The detection device 22 includes three or more magnetic field sensors. In FIG. 1, the detection device 22 includes a sensor 220-U, a sensor 220-V, and a sensor 220-W. The magnetic field sensor is, for example, a Hall element, a linear Hall integrated circuit (IC), or a magnetoresistive sensor. In the present embodiment, a description will be made on an assumption that the magnetic field sensor is a Hall element.

The sensor 220-U is a sensor that detects the magnetic field strength of the U-phase. The sensor 220-U outputs, to the amplification device 3, a U-phase differential signal, which is a differential signal representing the magnetic field strength of the U-phase. The sensor 220-V is a sensor that detects the magnetic field strength of the V-phase. The sensor 220-V outputs, to the amplification device 3, a V-phase differential signal, which is a differential signal representing the magnetic field strength of the V-phase. The sensor 220-W is a sensor that detects the magnetic field strength of the W-phase. The sensor 220-W outputs, to the amplification device 3, a W-phase differential signal, which is a differential signal representing the magnetic field strength of the W-phase.

The amplification device 3 is a device that amplifies the amplitude of the waveform of a differential signal. The amplification device 3 includes a differential amplifier 30-U, a differential amplifier 30-V, and a differential amplifier 30-W. The differential amplifier 30-U generates an analog U-phase signal Hu by performing amplification processing on the U-phase differential signal. The differential amplifier 30-V generates an analog V-phase signal Hv by performing amplification processing on the V-phase differential signal. The differential amplifier 30-W generates an analog W-phase signal Hw by performing amplification processing on the W-phase differential signal.

The position estimation device 4 is an information processing device that estimates the rotation position of the rotor of the motor. The position estimation device 4 acquires an analog U-phase signal Hu, an analog V-phase signal Hu, and an analog W-phase signal Hv from the amplification device 3. The position estimation device 4 calculates a plurality of feature amounts of each waveform of the U-phase signal Hu, the V-phase signal Hv, and the W-phase signal Hw. The position estimation device 4 estimates the rotation position of the rotor 21 of the motor 2 based on the plurality of feature amounts of the calculated waveforms. The position estimation device 4 outputs the estimation result (pole pair number) of the rotation position to the control device 5.

The control device 5 is an information processing device that generates a control signal. The control device 5 generates a control signal based on an instruction signal. The control signal is, for example, a signal representing a register value corresponding to an instructed rotation direction (CW: clockwise, CCW: counterclockwise) and a signal representing a current value of a current output from the drive device 6 to the stator 20. The control signal may be, for example, a current signal supplied to the power supply of the detection device 22 of the motor 2. The control device 5 can control the power supply of each of the sensors 220 by controlling the current amount supplied to the power supply of the detection device 22.

The drive device 6 is a device that drives the rotor of the motor. A control signal is input to the drive device 6 from the control device 5. The drive device 6 inputs a three-phase current of a current value represented by a control signal to each winding of the stator 20. The drive device 6 can rotate the rotor 21 by inputting a three-phase current to each winding of the stator 20. Although the details will be described later, in the first embodiment, the position estimation of the rotor 21 is performed in a state where the drive device 6 does not input a three-phase current to each winding of the stator 20. That is, in the first embodiment, the position estimation device 4 estimates the rotation position of the stopped rotor 21. The position estimation device 4 may estimate the rotation position of the rotating rotor 21.

An external device 7 is an information processing device that generates an instruction signal such as the rotation direction and rotation speed of the rotor. The external device 7 outputs an instruction signal to the control device 5.

Next, the details of the configuration example of the position estimation device 4 will be described. The position estimation device 4 includes a conversion device 40, an arithmetic unit 41, and a storage device 42. The conversion device 40 converts an analog signal into a digital signal. The conversion device 40 includes a converter 400-U, a converter 400-V, and a converter 400-W.

The converter 400 is a device that converts an analog signal into a digital signal. The converter 400-U converts an analog U-phase signal acquired from the differential amplifier 30-U into a digital U-phase signal. The converter 400-V converts an analog U-phase signal acquired from the differential amplifier 30-V into a digital V-phase signal. The converter 400-W converts an analog W-phase signal acquired from the differential amplifier 30-W into a digital V-phase signal.

The arithmetic unit 41 is a device that executes arithmetic processing. A part or entirety of the arithmetic unit 41 is implemented by a processor such as a central processing unit (CPU) executing a program expanded in a memory. A part or entirety of the arithmetic unit 41 may be implemented using hardware such as a large scale integration (LSI) or an application specific integrated circuit (ASIC).

The arithmetic unit 41 includes a switch unit 410, a correction unit 411, a feature amount calculation unit 412, and an estimation unit 413. Since the correction unit 411 is provided for the purpose of improving the accuracy of position estimation, the correction unit 411 is not an essential component.

The switch unit 410 connects any one of the feature amount calculation unit 412 and the correction unit 411 to the conversion device 40. When the estimation unit 413 estimates the rotation position of the rotor 21 based on a waveform having not been corrected, the switch unit 410 outputs the U-phase signal Hu, the V-phase signal Hv, and the W-phase signal Hw acquired from the conversion device 40 to the feature amount calculation unit 412.

When the estimation unit 413 estimates the rotation position of the rotor 21 based on a waveform having not been corrected (hereinafter referred to as a "corrected waveform"), the switch unit 410 outputs the U-phase signal Hu, the V-phase signal Hv, and the W-phase signal Hw acquired from the conversion device 40 to the correction unit 411. The correction unit 411 corrects the waveforms of each magnetic field strength of the U-phase signal Hu, the V-phase signal Hv, and the W-phase signal Hw. Thus, the correction unit 411 can improve the accuracy of the estimation of the rotation position of the rotor 21 by the estimation unit 413, as compared with the accuracy of the estimation of the rotation position of the rotor 21 by the estimation unit 413 based on an uncorrected waveform.

The feature amount calculation unit 412 acquires detection values of magnetic field strength at three or more places of the rotor 21. When the estimation unit 413 estimates the rotation position of the rotor 21 based on a waveform having not been corrected, the feature amount calculation unit 412 acquires the waveforms of each magnetic field strength of the U-phase signal Hu, the V-phase signal Hv, and the W-phase signal Hw from the switch unit 410. When the estimation unit 413 estimates the rotation position of the rotor 21 based on a corrected waveform, the feature amount calculation unit 412 acquires the corrected waveforms of each magnetic field strength of the U-phase signal Hu, the V-phase signal Hv, and the W-phase signal Hw from the correction unit 411.

The estimation unit 413 determines, for each segment associated with the selected section, whether or not the magnitude relationship of the plurality of feature amounts (each learning value) learned in advance coincides with the magnitude relationship of the plurality of feature amounts (each estimation value) calculated. The estimation unit 413 outputs the estimation result (pole pair number) of the rotation position to the control device 5.

The storage device 42 is preferably a nonvolatile recording medium (non-temporary recording medium) such as a flash memory and a hard disk drive (HDD). The storage device 42 may include a volatile recording medium such as a random access memory (RAM). The storage device 42 stores a program and a data table such as learning values.

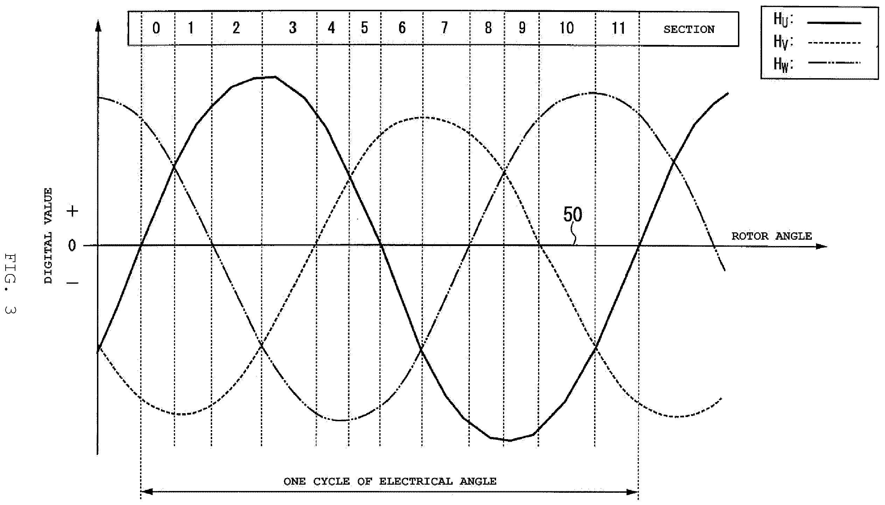

Next, the learning operation will be described. FIG. 3 is a view showing an example of the learning value of a waveform of a magnetic field strength. The learning value of the waveform of the magnetic field strength is generated in advance. The pre-generation processing of the learning value of the waveform is performed prior to shipment of the motor unit 1, for example. The pre-generation processing of the learning value of the waveform is performed, for example, by rotating the rotor 21 at a constant speed with an external position sensor connected to the rotor 21, and detecting the waveform output from the detection device 22.

The waveform shown in FIG. 3 is a corrected waveform of the magnetic field strength corresponding to the rotor angle of the rotor 21 in the case where the rotor 21 is rotating in the pre-generation processing of the learning value of the waveform. A data table presenting the correspondence relationship between a learning value and a section of a feature point (intersection point) in the waveform of each magnetic field strength is stored in advance in the storage device 42, for example.

FIG. 3 shows correspondence relationships between each of the learning value of the waveform of the U-phase signal Hu, the learning value of the waveform of the V-phase signal Hv, and the learning value of the waveform of the W-phase signal Hw, and a section, as an example of a correspondence relationship between the learning value of the waveform of each magnetic field strength and the section. The digital value of the amplitude which is a positive value represents, for example, the digital value of the magnetic field strength of the N pole. The digital value of the amplitude which is a negative value represents, for example, the digital value of the magnetic field strength of the S pole.

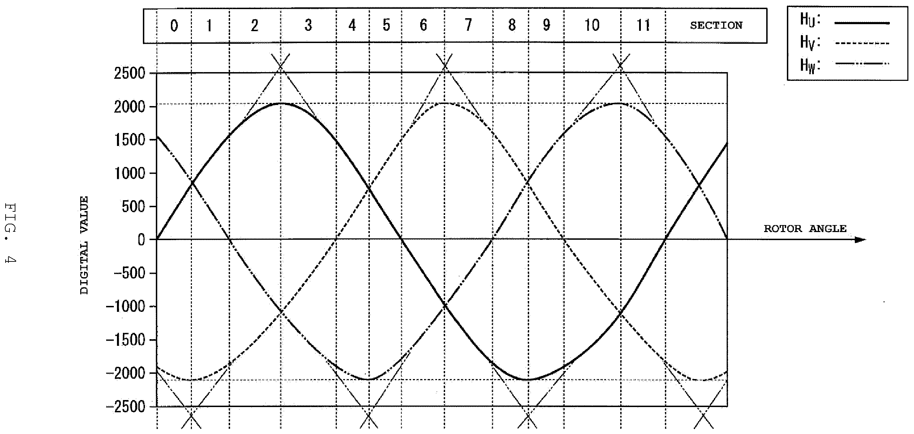

FIG. 4 is a view showing an example of the learning value of a corrected waveform. The learning value of the corrected waveform of the magnetic field strength is generated before the estimation unit 413 executes position estimation. The corrected waveform shown in FIG. 4 is a corrected waveform of the magnetic field strength corresponding to the rotor angle of the rotor 21 in the case where the rotor 21 is rotating in the pre-generation processing of the learning value of the corrected waveform. A data table presenting the correspondence relationship the learning value and the section of the feature point (intersection point) in the corrected waveform of each magnetic field strength is stored in advance in a storage device 42, for example. In FIG. 4, the waveform of each magnetic field strength is corrected (triangular wave). Since the rotor 21 has a magnetic pole of 4-pole pair, by using an appropriate correction coefficient from among four correction coefficients, the vicinity of the maximum value and the minimum value of the waveform of each magnetic field strength is sharpened so that the vicinity of the maximum value and the minimum value of the waveform does not become flat.

FIG. 4 shows correspondence relationships between each of the learning value of the corrected waveform of the U-phase signal Hu, the learning value of the corrected waveform of the V-phase signal Hv, and the learning value of the corrected waveform of the W-phase signal Hw, and a section, as an example of a correspondence relationship between the learning value of the corrected waveform of each magnetic field strength and the section. The digital value of the amplitude which is a positive value represents, for example, the digital value of the magnetic field strength of the N pole. The digital value of the amplitude which is a negative value represents, for example, the digital value of the magnetic field strength of the S pole.

When the estimation unit 413 estimates the rotation position of the rotor 21 based on the corrected waveform, the correction unit 411 makes the waveform of each magnetic field strength a corrected waveform (triangular wave). That is, the correction unit 411 sharpens the vicinity of the maximum value and the minimum value of the waveform by using an appropriate correction coefficient from among the four correction coefficients because the rotor 21 has a magnetic pole of 4-pole pair so that the vicinity of the maximum value and the minimum value of the waveform of each magnetic field strength does not become flat. The correction unit 411 generates a corrected waveform of each magnetic field strength of the same amplitude. These corrections improve the discriminability of each feature point of the corrected waveform.

The correction unit 411 may perform at least one of the correction procedure and the temperature compensation procedure described in, for example, any of Japanese Patent Application Laid-Open No. 2018-029469, Japanese Patent Application Laid-Open No. 2018-029470, and Japanese Patent Application Laid-Open No. 2018-029471.

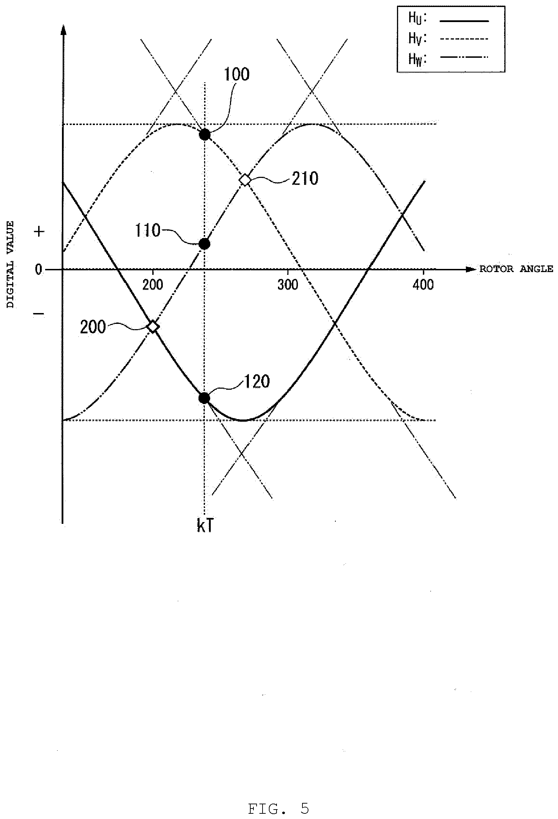

Next, an operation example of the position estimation device 4 will be described. FIG. 5 is a view showing an example of the feature point of the corrected waveform. In FIG. 5, the detection device 22 is energized while the rotation of the rotor 21 is stopped. The reference numeral "kT" shown in FIG. 5 represents the rotor angle (rotation position) of the rotor 21 at the time when the detection value in the corrected waveform is sampled by the feature amount calculation unit 412. The feature amount calculation unit 412 receives the detection value of a sample point 100 of the corrected waveform of the V-phase signal Hv. The feature amount calculation unit 412 receives the detection value of a sample point 110 of the corrected waveform of the W-phase signal Hw. The feature amount calculation unit 412 receives the detection value of a sample point 120 of the corrected waveform of the U-phase signal Hu.

The feature amount calculation unit 412 selects a section based on the detection value of each magnetic field strength of the U-phase signal Hu, the V-phase signal Hv, and the W-phase signal Hw from among a plurality of sections predetermined for the pole pair number shown in FIG. 2. In FIG. 5, the feature amount calculation unit 412 selects the section number "8" based on the magnitude relationships among the detection value of the sample point 100, the detection value of the sample point 110, and the detection value of the sample point 120, and the positive/negative of the sample point 110.

The feature amount calculation unit 412 calculates a plurality of feature amounts of the waveform or the corrected waveform of the magnetic field strength based on the combination of the detection values of the magnetic field strength corresponding to the selected section. The plurality of feature amounts are estimation values of each intersection point of the waveform or the corrected waveform of the magnetic field strength, for example.

The feature amount calculation unit 412 calculates the feature amount of the waveform or the corrected waveform of the magnetic field strength based on the combination of the sample point having the largest detection value and the sample point having the second largest detection value. In FIG. 5, the feature amount calculation unit 412 combines the sample point 100 and the sample point 110 based on the magnitude relationship of the detection value of the corrected waveform in the section number "8". Based on the combination of the sample point 100 and the sample point 110, the feature amount calculation unit 412 calculates an estimation value of a feature point 210 of the V-phase signal Hv and the W-phase signal Hw. The estimation value of the feature point 210 is the mean value of the detection value of the sample point 100 and the detection value of the sample point 110.

The feature amount calculation unit 412 calculates the feature amount of the waveform or the corrected waveform of the magnetic field strength based on the combination of the sample point having the second largest detection value and the sample point having the third largest detection value. In FIG. 5, the feature amount calculation unit 412 combines the sample point 110 and the sample point 120 based on the magnitude relationship of the detection value of the corrected waveform in the section number "8". Based on the combination of the sample point 110 and the sample point 120, the feature amount calculation unit 412 calculates an estimation value of a feature point 200 of the U-phase signal Hu and the W-phase signal Hw. The estimation value of the feature point 200 is the mean value of the detection value of the sample point 110 and the detection value of the sample point 120.

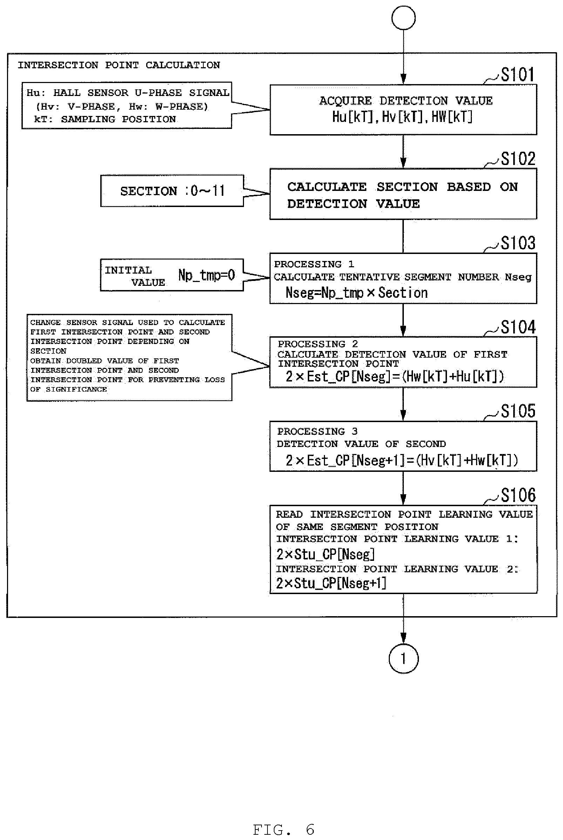

FIG. 6 is a flowchart showing an example of the calculation processing of an intersection point. The position estimation device 4 repeatedly executes the operations shown in the flowcharts of FIGS. 6, 7, and 8 at predetermined cycles, for example. The feature amount calculation unit 412 acquires, from the correction unit 411, the U-phase signal Hu [kT], the V-phase signal Hv [kT], and the W-phase signal Hw [kT] whose waveforms have been corrected, as detection values of each magnetic field strength. The feature amount calculation unit 412 may acquire, from the switch unit 410, the U-phase signal Hu [kT], the V-phase signal Hv [kT], and the W-phase signal Hw [kT] whose waveforms have not been corrected (Step S101).

The feature amount calculation unit 412 calculates the section number from the detection value of each magnetic field strength based on the correspondence relationship between the digital value and the section shown in FIG. 3, for example. For example, the feature amount calculation unit 412 calculates the section number "8" shown in FIG. 3 from the detection values of the sample points 100, 110, and 120 shown in FIG. 5 (Step S102).

Based on the calculated section number "Section", the feature amount calculation unit 412 calculates a tentative segment number "Nseg" as shown in Expression (1).

$$\mathrm{Nseg\ =\ Np\_tmp\ \times\ Section\ ...(1)}$$

Here, the initial value of the pole pair number "Np_tmp" is 0. In the motor 2 shown in FIG. 1, the pole pair number is a number from 0 to 3 as shown in FIG. 2 (Step S103).

The feature amount calculation unit 412 calculates a doubled value of the estimation value "Est_CP [Nseg]" of the feature point 200, as shown in Expression (2), as the feature amount of the waveforms of the U-phase signal Hu [kT] and the W-phase signal Hw [kT]. That is, based on the detection value of the sample point 120 and the detection value of the sample point 110 shown in FIG. 5, the feature amount calculation unit 412 calculates a doubled value of the estimation value of the feature point 200 as the feature amount of the waveform of the magnetic field strength as shown in Expression (2).

$$\mathrm{2\ \times\ Est\_CP[Nseg]\ =\ (Hw[kT]\ +\ Hu[kT])...(2)}$$

(Step S104).

The feature amount calculation unit 412 calculates a doubled value of the estimation value "Est_CP[Nseg + 1]" of the feature point 210, as shown in Expression (3), as the feature amount of the waveforms of the V-phase signal Hv [kT] and the W-phase signal Hw [kT]. That is, based on the detection value of the sample point 120 and the detection value of the sample point 110, the feature amount calculation unit 412 calculates a doubled value of the estimation value of the feature point 210 as the feature amount of the waveform of the magnetic field strength as shown in Expression (3).

$$2 \times Est\_CP[Nseg + 1] = (Hv[kT] + Hw[kT])...(3)$$

The reason why the feature amount calculation unit 412 calculates the doubled value is to prevent loss of significance (Step S105).

The estimation unit 413 acquires a doubled value (= 2 × Stu_CP [Nseg]) of the learning value of the feature point 200 of the tentative segment number "Nseg". The estimation unit 413 acquires a doubled value (= 2 × Stu_CP[Nseg + 1]) of the learning value of the feature point 210 of the tentative segment number "Nseg + 1" (Step S106).

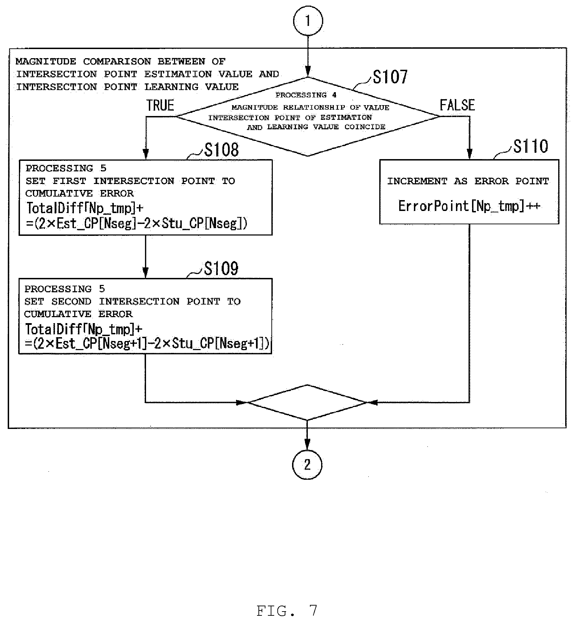

FIG. 7 is a flowchart showing an example of the magnitude comparison processing. The position estimation device 4 executes the magnitude comparison processing following the calculation processing of the intersection point shown in FIG. 6.

The estimation unit 413 determines the magnitude relationship between the doubled value of the estimation value of the feature point 200 and the doubled value of the estimation value of the feature point 210. That is, the estimation unit 413 determines whether or not Expression (4) is established.

$$2 \times Est\_CP[Nseg] < 2 \times Est\_CP[Nseg + 1]...(4)$$

The estimation unit 413 determines the magnitude relationship between the doubled value of the learning value of the feature point 200 and the doubled value of the learning value of the feature point 210. That is, the estimation unit 413 determines whether or not Expression (5) is established.

$$2 \times Stu\_CP[Nseg] < 2 \times Stu\_CP[Nseg + 1]...(5)$$

The estimation unit 413 determines whether or not the magnitude relationship of the doubled value of the estimation value of the feature point 200 and the doubled value of the estimation value of the feature point 210 coincides with the magnitude relationship of the doubled value of the learning value of the feature point 200 and the doubled value of the learning value of the feature point 210. For example, in FIGS. 2, 4, and 5, the estimation unit 413 determines, with respect to the segment numbers "8", "20", "32", and "44" associated with the section number" 8" in FIG. 2, whether or not the magnitude relationship of each learning value of the first intersection point and the second intersection point corresponding to the feature points 200 and the feature points 210 in FIG. 4 coincide with the magnitude relationship of each estimation value of the feature point 200 and the feature point 210 in FIG. 5 (Step S107).

If the magnitude relationships coincide (Step S107: TRUE), the estimation unit 413 adds, as shown in Expression (6), to the variable "TotalDiff[Np_tmp]" of the cumulative error, the error between the doubled value of the estimation value of the feature point 200 and the doubled value of the learning value of the feature point 200.

$$TotalDiff[Np\_tmp] + = (2 \times Est\_CP[Nseg] - 2 \times Est\_CP[Nseg])...(6) \ (Step \ S108).$$

The estimation unit 413 adds, as shown in Expression (7), to the variable "TotalDiff[Np_tmp]" of the cumulative error, the error between the doubled value of the estimation value of the feature point 210 and the doubled value of the learning value of the feature point 210.

$$TotalDiff[Np\_tmp] + = (2 \times Est\_CP[Nseg + 1] - 2 \times Est\_CP[Nseg + 1])...(7) \ (Step \ S109).$$

If the magnitude relationships do not coincide (Step S107: FALSE), the estimation unit 413 increments the value of the error point "ErrorPoint[Np_tmp]", which is the evaluation value of the error for each segment Nseg (Step S110).

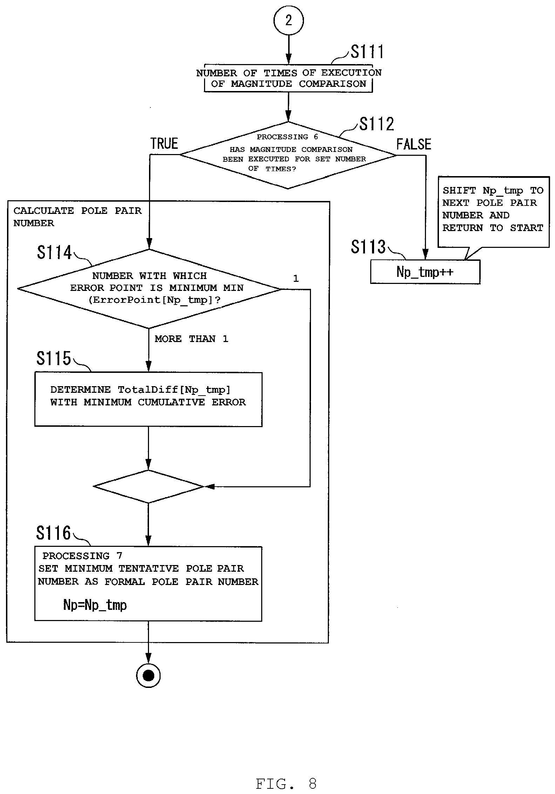

FIG. 8 is a flowchart showing an example of the calculation processing of a pole pair number. The position estimation device 4 executes the calculation processing of the pole pair number following the magnitude comparison processing shown in FIG. 7.

The estimation unit 413 increments the value of the variable representing the number of times of execution of the magnitude comparison processing (Step S111). The estimation unit 413 determines whether or not the value of the variable representing the number of times of execution of the magnitude comparison processing is equal to or greater than the set number of times (Step S112). If the value of the variable representing the number of times of execution is less than the set number of times (Step S112: FALSE), the estimation unit 413 increments the value of the pole pair number "Np_tmp" (Step S113).

If the value of the variable representing the number of times of execution is equal to or greater than the set number of times (Step S112: TRUE), the estimation unit 413 determines the number of the smallest error points "Min(ErrorPoint[Np_tmp])" among the plurality of error points (Step S114). If number of the smallest error points is 1 (Step S114: 1), the estimation unit 413 proceeds the processing to step S116. Thus, the estimation unit 413 estimates the pole pair number associated with the segment having the same magnitude relationship, as the rotation position of the rotor 21.

If the number of the smallest error points is more than 1 (Step S114: Plural), the estimation unit 413 acquires the pole pair number "Np_tmp" having the smallest cumulative error (Step S115). The estimation unit 413 substitutes the pole pair number "Np_tmp" into the variable "Np" representing the correct pole pair number. The estimation unit 413 outputs the variable "Np" representing the correct pole pair number to the control device 5 as a detection result (absolute value of the mechanical angle) of the rotation position. Thus, the estimation unit 413 calculates, for each segment, an error between each learning value and each estimation value. The estimation unit 413 may calculate, for each segment, an error between an absolute value of each learning value and an absolute value of each estimation value. The estimation unit 413 estimates the pole pair number of the segment in which the error between each learning value and each estimation value is minimum, as the rotation position of the rotor 21 (Step S116) .

As described above, the position estimation device 4 of the first embodiment includes the feature amount calculation unit 412 and the estimation unit 413. The feature amount calculation unit 412 acquires detection values of magnetic field strength at three or more places of the rotor 21 in a range where the rotor angle is less than one rotation. The feature amount calculation unit 412 selects a section based on the detection value of the magnetic field strength from a plurality of sections predetermined for the pole pair number of the rotor 21. The feature amount calculation unit 412 calculates a plurality of feature amounts of the waveform of the magnetic field strength based on the combination of the detection values of the magnetic field strength corresponding to the selected section. The estimation unit 413 determines, for each segment associated with the selected section, whether or not the magnitude relationship of the plurality of feature amounts learned in advance coincides with the magnitude relationship of the plurality of feature amounts calculated. The estimation unit 413 estimates the pole pair number associated with the segment having the same magnitude relationship, as the rotation position of the rotor 21.

Due to this, the position estimation device 4 of the first embodiment can estimate the rotation position of the rotor 21 even when the rotor angle is 0 degrees. The control device 5 may not adjust the origin of the rotation position of the rotor 21 when the motor 2 or the control device 5 is turned on. Since the estimation unit 413 estimates the rotation position of the rotor 21 based on the magnitude relationship between each learning value and each estimation value, it is possible to estimate the rotation position of the rotor 21 even if the output of the sensor 220 changes according to aging deterioration, environmental temperature, and the like.

The second embodiment is different from the first embodiment in that the position estimation device 4 estimates the rotation position of the rotor 21 in a range where the rotor angle is equal to or less than "half cycle of the electrical angle", for example, in a range where the rotor angle is equal to or less than "1/8 (mechanical angle)" rotation. For the second embodiment, differences from the first embodiment will be described.

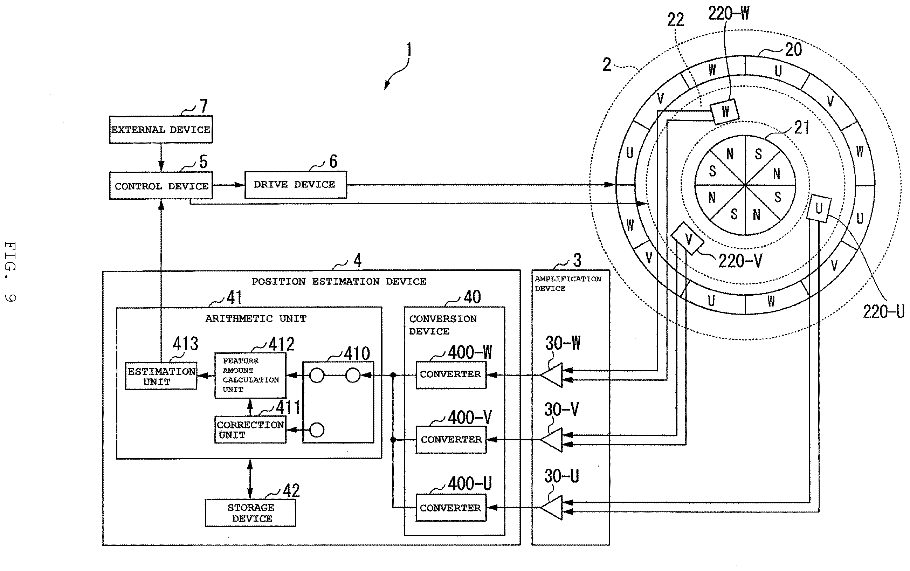

FIG. 9 is a view showing an example of the configuration of the motor unit 1. In the second embodiment, the drive device 6 rotates the rotor 21 in a range where the rotor angle is equal to or less than "1/8 (mechanical angle)" rotation. The switch unit 410 outputs, to the feature amount calculation unit 412, the U-phase signal Hu, the V-phase signal Hv, and the W-phase signal Hw acquired from the conversion device 40. In the second embodiment, the correction processing of the waveform of the magnetic field strength by the correction unit 411 is not executed. When the motor unit 1 executes the position estimation based on the waveform to which the correction processing is not applied, the motor unit 1 can improve the discriminability of the pattern of each feature point of the waveform. Note that the correction unit 411 may perform noise reduction processing on the waveform or the like.

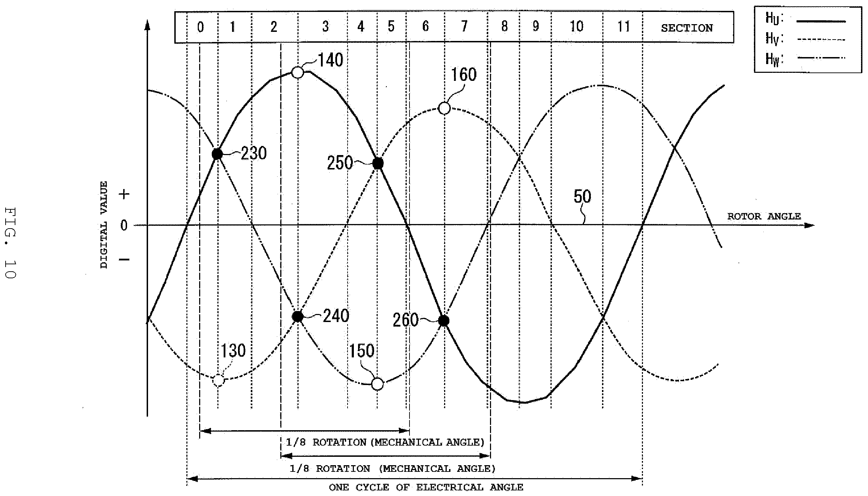

FIG. 10 is a view showing an example of a detection value of a feature point of a waveform. The feature amount calculation unit 412 acquires detection values of magnetic field strength at three or more places of the rotor 21 from the switch unit 410 according to the rotor angle of the rotor 21. In FIG. 10, the feature amount calculation unit 412 acquires, from the switch unit 410, the waveform of each magnetic field strength of the U-phase signal Hu, the V-phase signal Hv, and the W-phase signal Hw in the range of 1/8 rotation (mechanical angle). The feature amount calculation unit 412 calculates a plurality of feature amounts of the waveform of the magnetic field strength based on the detection value of the magnetic field strength. The plurality of feature amounts are, for example, the absolute value of a detection value of each intersection point of the waveform of the magnetic field strength and the absolute value of a detection value of the maximum value or the minimum value of the waveform of the magnetic field strength.

When the positive/negative of at least one of the detection values of the waveform of each magnetic field strength changes, the feature amount calculation unit 412 calculates the absolute value of the detection value of the maximum value or the minimum value of the waveform of the magnetic field strength. For example, during the period from the middle of the section "0" to the section "1", none of the waveforms of the U-phase signal Hu, the V-phase signal Hv, and the W-phase signal Hw passes through a reference line 50 having a value of 0 (zero cross). In this case, since the position of a feature point 130 in the waveform of the V-phase signal Hv is sometimes not determined, the feature amount calculation unit 412 does not have to calculate the absolute value of the detection value of the feature point 130.

For example, when the estimation unit 413 estimates the rotation position of the rotor 21 based on the range of "1/8 rotation (mechanical angle)" from the middle of the section "0" to the section "5", the plurality of feature amounts are the absolute value of the detection value of a feature point 230 which is the first intersection point, the absolute value of the detection value of a feature point 240 which is the second intersection point, the absolute value of the detection value of a feature point 250 which is the third intersection point, the absolute value of the detection value of a feature point 140 which is the maximum value, and the absolute value of the detection value of a feature point 150 which is the minimum value.

For example, when the estimation unit 413 estimates the rotation position of the rotor 21 based on the range of "1/8 rotation (mechanical angle)" from the middle of the section "2" to the section "7", the plurality of feature amounts are the absolute value of the detection value of the feature point 240 which is the first intersection point, the absolute value of the detection value of the feature point 250 which is the second intersection point, the absolute value of the detection value of a feature point 260 which is the third intersection point, the absolute value of the detection value of a feature point 160 which is the maximum value, and the absolute value of the detection value of the feature point 150 which is the minimum value.

The feature amount calculation unit 412 may calculate a plurality of feature amounts by multiplying the detection value of the magnetic field strength by a magnification. Due to this, the feature amount calculation unit 412 can prevent the occurrence of loss of significance in the arithmetic processing of the detection value.

The estimation unit 413 determines, for each pole pair number of the rotor 21, whether or not the pattern of the magnitude relationship of the plurality of feature amounts (learning value) learned in advance coincides with the pattern of the magnitude relationship of the plurality of feature amounts (detection value) calculated. The estimation unit 413 estimates the pole pair number with which the pattern of the magnitude relationship coincides as the rotation position of the rotor 21. Since the estimation unit 413 estimates the rotation position of the rotor 21 based on the magnitude relationship between each learning value and each detection value, it is possible to estimate the rotation position of the rotor 21 even if the output of the sensor 220 changes according to aging deterioration, environmental temperature, and the like.

The estimation unit 413 may estimate the rotation position of the rotor 21 based on the difference between the plurality of feature amounts (learning value) learned in advance and the plurality of feature amounts (detection value) calculated. For example, the estimation unit 413 may estimate, as the rotation position of the rotor 21, the pole pair number with which the difference between the learning value and the detection value becomes minimum.

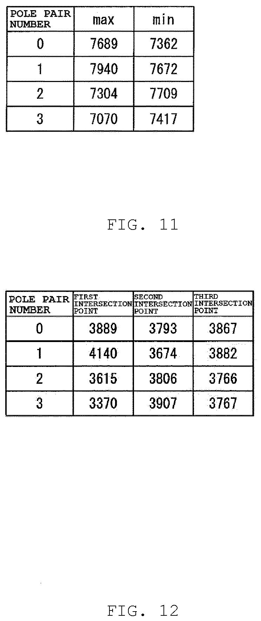

FIG. 11 is a view showing an example of the learning value of the maximum value and the minimum value of the waveform. In FIG. 11, the learning value of the maximum value of the waveform, the learning value of the minimum value of the waveform, and the pole pair number are associated with one another. The doubled value of the absolute value of the detection value of the feature point 140 (max) is, for example, "7660". The doubled value of the absolute value of the detection value of the feature point 150 (max) is, for example, "7410". In this case, the pattern of the magnitude relationship between the maximum value and the minimum value is a pattern in which the absolute value of the detection value of the feature point 140 is larger than the absolute value of the detection value of the feature point 150.

The estimation unit 413 determines, for each pole pair number of the rotor 21, whether or not the pattern of the magnitude relationship of the absolute values of each learning values of the maximum value and the minimum value coincides with the pattern of the magnitude relationship of the absolute values of the detection values of the feature point 140 and the feature point 150.

In FIG. 11, the estimation unit 413 determines that the pattern of the magnitude relationship of the maximum value and the minimum value associated with the pole pair number "0" coincides with the pattern of the magnitude relationship of the absolute values of the detection values of the feature point 140 and the feature point 150. The same is true for the pole pair number "1". The estimation unit 413 adds an error between each detection value and each learning value for each pole pair number with which each pattern of the magnitude relationship coincides.

In FIG. 11, the estimation unit 413 determines that the pattern of the magnitude relationship of the maximum value and the minimum value associated with the pole pair number "2" does not coincide with the pattern of the magnitude relationship of the absolute values of the detection values of the feature point 140 and the feature point 150. The same is true for the pole pair number "3". The estimation unit 413 adds a value to an error point of a pole pair number with which each pattern of the magnitude relationship does not coincide.

Since the estimation unit 413 does not add a value to the error point of the pole pair number with which each pattern of the magnitude relationship coincides, the value of the error point of the pole pair number with which each pattern of the magnitude relationship coincides is the minimum value "0".

FIG. 12 is a view showing an example of the learning value of an intersection point of a waveform. In FIG. 12, the learning value of the first intersection point of the waveform, the learning value of the second intersection point of the waveform, the learning value of the third intersection point of the waveform, and the pole pair number are associated with one another. The doubled value of the absolute value of the detection value of the feature point 230 (first intersection point) is, for example, "3888". The doubled value of the absolute value of the detection value of the feature point 240 (second intersection point) is, for example, "3779". The doubled value of the absolute value of the detection value of the feature point 250 (third intersection point) is, for example, "3881". In this case, the pattern of the magnitude relationship of each intersection point is a pattern in which the doubled value of the absolute value of the detection value of the feature point 230 is larger than the doubled value of the absolute value of the detection value of the feature point 240. It is a pattern in which the doubled value of the absolute value of the detection value of the feature point 230 is larger than the doubled value of the absolute value of the detection value of the feature point 250. It is a pattern in which the doubled value of the absolute value of the detection value of the feature point 240 is smaller than the doubled value of the absolute value of the detection value of the feature point 250.

The estimation unit 413 determines, for each pole pair number of the rotor 21, whether or not the pattern of the magnitude relationship of the absolute values of the learning values of the three intersection points coincides with the pattern of the magnitude relationship of the absolute values of the detection values of the feature point 230, the feature point 240, and the feature point 250.

In FIG. 12, the estimation unit 413 determines that the pattern of the magnitude relationship of the absolute value of each learning value of the three intersection points associated with the pole pair number "0" coincides with the pattern of the magnitude relationship of the absolute value of each detection value of the feature points 140 and 150. The same is true for the pole pair number "1". The estimation unit 413 adds an error between each detection value and each learning value for each pole pair number with which each pattern of the magnitude relationship coincides.

In FIG. 12, the estimation unit 413 determines that the pattern of the magnitude relationship of the absolute value of each learning value of the three intersection points associated with the pole pair number "2" does not coincide with the pattern of the magnitude relationship of the absolute value of each detection value of the feature points 140 and 150. The same is true for the pole pair number "3". The estimation unit 413 adds a value to an error point of a pole pair number with which each pattern of the magnitude relationship does not coincide.

The estimation unit 413 acquires, for each pole pair number, a cumulative error between each detection value and each learning value. The estimation unit 413 substitutes one pole pair number of the minimum cumulative error into one variable representing the correct pole pair number.

The estimation unit 413 may acquire the pole pair number of the smallest error point from among each pole pair number. The estimation unit 413 may substitute one pole pair number of the smallest error point into one variable representing the correct pole pair number.

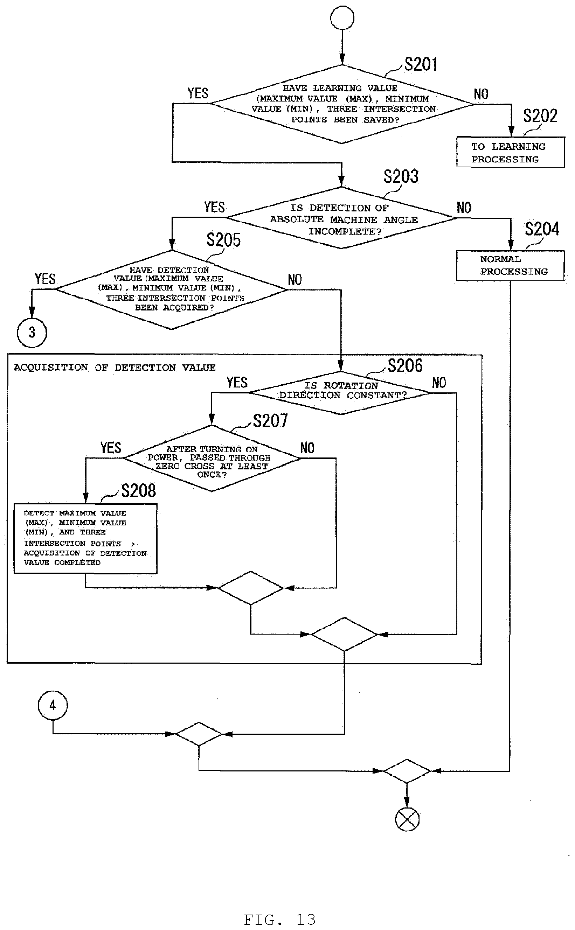

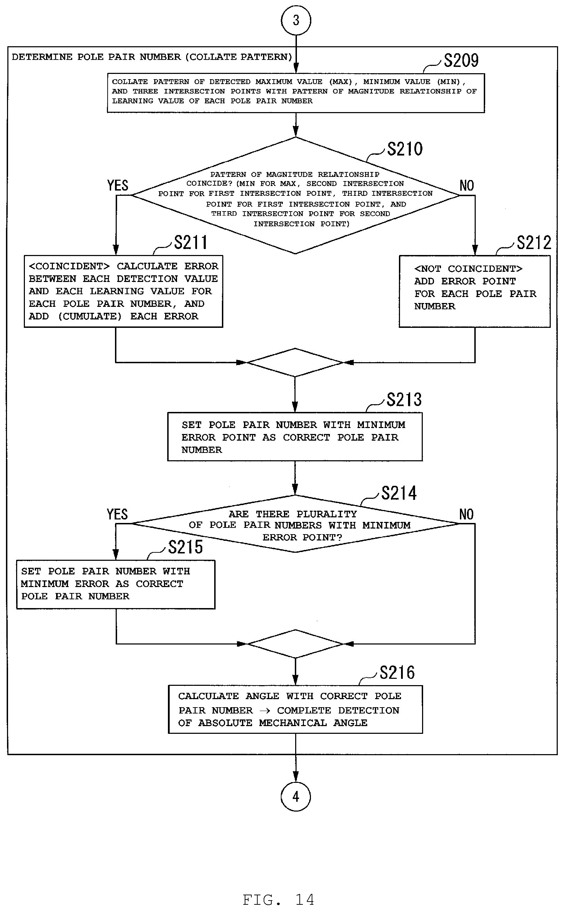

Next, an operation example of the position estimation device 4 will be described. FIG. 13 is a flowchart showing an example of the acquisition processing of a detection value. The position estimation device 4 repeatedly executes the operations shown in the flowcharts of FIGS. 13 and 14 at predetermined cycles, for example. The feature amount calculation unit 412 determines whether or not each learning value from the first intersection point to the third intersection point of the waveform of the magnetic field strength and each learning value of the maximum value and the minimum value of the waveform of the magnetic field strength are stored in the storage device 42. For example, the feature amount calculation unit 412 determines whether or not each learning value of the feature point 230, the feature point 240, and the feature point 250, and each learning value of the feature point 140 and the feature point 150 are stored in the storage device 42 (Step S201).

If each learning value is not stored in the storage device 42 (Step S201: NO), the feature amount calculation unit 412 executes processing of calculating (learning processing) the learning values of the feature points. The feature amount calculation unit 412 records the calculated learning value of the feature point and the pole pair number into a data table stored in the storage device 42. The feature amount calculation unit 412 may record the calculated learning value of the feature point and the segment number into the data table (Step S202).

If each learning value is stored in the storage device 42 (Step S201: YES), the feature amount calculation unit 412 determines whether or not the estimation of the rotation position (absolute value of the mechanical angle) has been completed (Step S203). When the estimation of the rotation position has been completed (Step S203: NO), the position estimation device 4 executes predetermined normal processing (Step S204).

The feature amount calculation unit 412 executes processing of calculating each detection value from the first intersection point to the third intersection point of the waveform of the magnetic field strength. The feature amount calculation unit 412 executes processing of calculating each detection value of the maximum value and the minimum value of the waveform of the magnetic field strength. The feature amount calculation unit 412 determines whether or not acquisition of each detection value has been completed (Step S205).

If the acquisition of each detection value has not been completed (Step S205: NO), the feature amount calculation unit 412 determines whether or not the rotation direction of the rotor 21 is constant, based on the waveform of the magnetic field strength (Step S206). If the rotation direction of the rotor 21 is not constant (Step S206: NO), the position estimation device 4 ends the processing shown in FIG. 13.

When the rotation direction of the rotor 21 is constant (Step S206: YES), it is determined whether or not any waveform of the U-phase signal Hu, the V-phase signal Hv, or the W-phase signal Hw has passed through the reference line 50 (zero cross) after the power of the position estimation device 4 is turned on.

For example, in the case where the estimation unit 413 estimates the rotation position of the rotor 21 based on the range of "1/8 rotation (mechanical angle)" from the middle of the section "0" to the section "5" shown in FIG. 10, none of the waveform of the U-phase signal Hu, the V-phase signal Hv, and the W-phase signal Hw has passed through the reference line 50 during the period from the middle of the section "0" to the section "1". That is, during the period from the middle of the section "0" to the section "1", the positive/negative of the digital value has not changed in any waveform of the U-phase signal Hu, the V-phase signal Hv, and the W-phase signal Hw. If the positive/negative of the digital value has not changed, the detection value of the feature point 130 representing the minimum value of the V-phase signal Hv during the period from the middle of the section "0" to the section "1" may not be acquired. This is because since the position of the feature point 130 in the waveform of the V-phase signal Hv is not determined, the feature amount calculation unit 412 sometimes fails to accurately calculate the detection value of the feature point 130.

For example, in the case where the estimation unit 413 estimates the rotation position of the rotor 21 based on the range of "1/8 rotation (mechanical angle)" from the middle of the section "2" to the section "7" shown in FIG. 10, the detection value of the feature point 140 representing the maximum value of the waveform of the U-phase signal Hu during the period from the middle of the section "2" to the section "7" may not be acquired for the same reason (Step S207).

If none of the waveforms has passed through the reference line 50 (Step S207: NO), the position estimation device 4 ends the processing shown in FIG. 13.

When any of the waveforms has passed through the reference line 50 in accordance with the rotation of the rotor 21 (Step S207: YES), the feature amount calculation unit 412 executes processing of calculating each detection value from the first intersection point to the third intersection point of the waveform of the magnetic field strength, and processing of calculating each detection value of the maximum value and the minimum value of the waveform of the magnetic field strength. For example, in the case where the estimation unit 413 estimates the rotation position of the rotor 21 based on the range of "1/8 rotation (mechanical angle)" from the middle of the section "0" to the section "5" shown in FIG. 10, the feature amount calculation unit 412 executes processing of calculating each detection value of the feature point 230, the feature point 240, and the feature point 250, and processing of calculating each detection value of the feature point 140 and the feature point 150 (Step S208).

FIG. 14 is a flowchart showing an example of the calculation processing of the pole pair number. The position estimation device 4 executes the calculation processing of the pole pair number following the acquisition processing of the detection value shown in FIG. 13.

When the acquisition of each detection value is completed in step S205 shown in FIG. 13 (Step S205: YES), the estimation unit 413 collates the pattern of the magnitude relationship of each detection value from the first intersection point to the third intersection point with the pattern of the magnitude relationship of each learning value from the first intersection point to the third intersection point. The estimation unit 413 collates the pattern of the magnitude relationship of the absolute value of each detection value of the maximum value and the minimum value with the pattern of the magnitude relationship of the absolute value of each learning value of the maximum value and the minimum value.

For example, in the case where the estimation unit 413 estimates the rotation position of the rotor 21 based on the range of "1/8 rotation (mechanical angle)" from the middle of the section "0" to the section "5" shown in FIG. 10, the estimation unit 413 collates the pattern of the magnitude relationship of each detection value of the feature point 230, the feature point 240, and the feature point 250 with the pattern of the magnitude relationship of each learning value of the feature point 230, feature point 240, and feature point 250. The estimation unit 413 collates the pattern of the magnitude relationship of the absolute value of each detection value of the feature point 140 and the feature point 150 with the pattern of the magnitude relationship of the absolute value of each learning value of the feature point 140 and the feature point 150 (Step S209).

The estimation unit 413 determines whether or not each pattern of the magnitude relationship coincides. That is, the estimation unit 413 determines whether or not the magnitude relationship between the absolute value of the detection value of the maximum value and the absolute value of the detection value of the minimum value, the magnitude relationship between the detection value of the first intersection point and the detection value of the second intersection point, the magnitude relationship between the detection value of the first intersection point and the detection value of the third intersection point, and the magnitude relationship between the detection value of the second intersection point and the detection value of the third intersection point all coincide together.

For example, in the case of estimating the rotation position of the rotor 21 based on the range of "1/8 rotation (mechanical angle)" from the middle of the section "0" to the section "5" shown in FIG. 10, the estimation unit 413 determines whether or not the magnitude relationship between the absolute value of the detection value of the feature point 140 and the absolute value of the detection value of the feature point 150, the magnitude relationship between the detection value of the feature point 230 and the detection value of the feature point 240, the magnitude relationship between the detection value of the feature point 230 and the detection value of the feature point 250, and the magnitude relationship between the detection value of the feature point 240 and the detection value of the feature point 250 all coincide together.

For example, in the case of estimating the rotation position of the rotor 21 based on the range of "1/8 rotation (mechanical angle)" from the middle of the section "2" to the section "7" shown in FIG. 10, the estimation unit 413 determines whether or not the magnitude relationship between the absolute value of the detection value of the feature point 160 and the absolute value of the detection value of the feature point 150, the magnitude relationship between the detection value of the feature point 240 and the detection value of the feature point 250, the magnitude relationship between the detection value of the feature point 240 and the detection value of the feature point 260, and the magnitude relationship between the detection value of the feature point 260 and the detection value of the feature point 260 all coincide together (Step S210).

If each pattern of the magnitude relationship coincides (Step S210: YES), the estimation unit 413 adds an error between each detection value and each learning value for each pole pair number with which each pattern of the magnitude relationship coincides. Due to this, the estimation unit 413 acquires, for each pole pair number, a cumulative error between each detection value and each learning value (Step S211). If each pattern of the magnitude relationship does not coincide (Step S210: NO), the estimation unit 413 adds a value to an error point of a pole pair number with which each pattern of the magnitude relationship does not coincide (Step S212).

The estimation unit 413 acquires the pole pair number of the smallest error point from among the pole pair numbers. The estimation unit 413 substitutes the one or more acquired pole pair numbers into one or more variables representing the correct pole pair number (Step S213). The estimation unit 413 determines whether or not the number of pole pair numbers of the smallest error point is more than 1 (Step S214). If the number of the pole pair numbers of the minimum error point is 1 (Step S214: NO), the estimation unit 413 proceeds the processing to step S216. If the number of the pole pair numbers of the minimum error point is more than 1 (Step S214: YES), the estimation unit 413 substitutes one pole pair number of the minimum cumulative error into one variable representing the correct pole pair number (Step S215). The estimation unit 413 outputs one variable representing the correct pole pair number to the control device 5 as a detection result (absolute value of the mechanical angle) of the rotation position (Step S216).

As described above, the position estimation device 4 of the second embodiment includes the feature amount calculation unit 412 and the estimation unit 413. The feature amount calculation unit 412 acquires, according to the rotor angle, detection values of magnetic field strength at three or more places of the rotor 21 in a range where the rotor angle is less than one rotation. The feature amount calculation unit 412 calculates a plurality of feature amounts of the waveform of the magnetic field strength based on the detection value of the magnetic field strength. The estimation unit 413 determines, for each pole pair number of the rotor 21, whether or not the pattern of the magnitude relationship of the plurality of feature amounts learned in advance coincides with the pattern of the magnitude relationship of the plurality of feature amounts calculated. The estimation unit 413 estimates the pole pair number with which the pattern of the magnitude relationship coincides as the rotation position of the rotor 21.

Due to this, the position estimation device 4 of the second embodiment can estimate the rotation position of the rotor 21 even if the rotor angle is equal to or less than "1/8 (mechanical angle)" rotation. In the case where the estimation unit 413 estimates the rotation position of the rotor 21 based on the detection values of the total of three feature points, i.e., two intersection points and the feature point of the maximum value or minimum value, the feature amount calculation unit 412 can calculate three feature amounts, which is smaller for five feature amounts, and hence the estimation unit 413 can estimate the rotation position of the rotor 21 even if the rotor angle is equal to or smaller than "1/16 (mechanical angle)" rotation.

After executing the position estimation method shown in the first embodiment, the position estimation device 4 of the second embodiment may execute the position estimation method shown in the second embodiment by succeeding the parameter value of the position estimation result of the position estimation result. After executing the position estimation method shown in the second embodiment, the position estimation device 4 of the second embodiment may execute the position estimation method shown in Patent Literature 1 by succeeding the parameter value of the position estimation result of the position estimation result.

The third embodiment is different from the second embodiment in that the position estimation device 4 estimates the rotation position of the rotor 21 based on a larger number of feature points. For the third embodiment, differences from the second embodiment will be described.

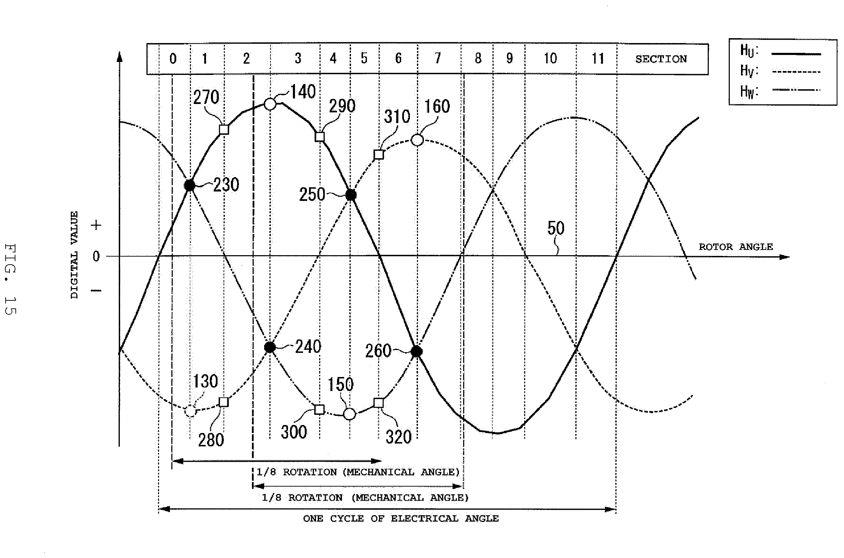

FIG. 15 is a view showing an example of the detection value of a feature point of a waveform. The feature amount calculation unit 412 acquires detection values of magnetic field strength at three or more places of the rotor 21 from the switch unit 410 according to the rotor angle of the rotor 21. In FIG. 15, the feature amount calculation unit 412 acquires, from the switch unit 410, the waveform of each magnetic field strength of the U-phase signal Hu, the V-phase signal Hv, and the W-phase signal Hw in the range of 1/8 rotation (mechanical angle).

The feature amount calculation unit 412 calculates a plurality of feature amounts of the waveform of the magnetic field strength based on the detection value of the magnetic field strength. The plurality of feature amounts are, for example, the absolute value of a detection value of each intersection point of the waveform of the magnetic field strength and the absolute value of a detection value of the maximum value or the minimum value of the waveform of the magnetic field strength, and the absolute value of a detection value of each other waveform when the waveform of the magnetic field strength passes through the reference line 50.

When any of the waveform of the U-phase signal Hu, the V-phase signal Hv, and the W-phase signal Hw passes through the reference line 50, the feature amount calculation unit 412 calculates the absolute value of the detection value of each of the other waveforms. In FIG. 15, when the waveform of the W-phase signal Hw passes through the reference line 50, the feature amount calculation unit 412 calculates the absolute value of the detection value of a feature point 270 of the U-phase signal Hu and the absolute value of the detection value of a feature point 280 of the V-phase signal Hv. When the waveform of the V-phase signal Hv passes through the reference line 50, the feature amount calculation unit 412 calculates the absolute value of the detection value of a feature point 290 of the U-phase signal Hu and the absolute value of the detection value of a feature point 300 of the W-phase signal Hw. When the waveform of the U-phase signal Hu passes through the reference line 50, the feature amount calculation unit 412 calculates the absolute value of the detection value of a feature point 310 of the V-phase signal Hv and the absolute value of the detection value of a feature point 320 of the W-phase signal Hw.

For example, when the estimation unit 413 estimates the rotation position of the rotor 21 based on the range of "1/8 rotation (mechanical angle)" from the middle of the section "0" to the section "5", the plurality of feature amounts are the absolute value of the detection value of a feature point 230 which is the first intersection point, the absolute value of the detection value of a feature point 240 which is the second intersection point, the absolute value of the detection value of a feature point 250 which is the third intersection point, the absolute value of the detection value of a feature point 140 which is the maximum value, the absolute value of the detection value of a feature point 150 which is the minimum value, and the absolute value of each detection value of the feature point 270, the feature point 280, the feature point 290, and the feature point 300.

For example, when the estimation unit 413 estimates the rotation position of the rotor 21 based on the range of "1/8 rotation (mechanical angle)" from the middle of the section "2" to the section "7", the plurality of feature amounts are the absolute value of the detection value of the feature point 240 which is the first intersection point, the absolute value of the detection value of the feature point 250 which is the second intersection point, the absolute value of the detection value of a feature point 260 which is the third intersection point, the absolute value of the detection value of a feature point 160 which is the maximum value, the absolute value of the detection value of the feature point 150 which is the minimum value, and the absolute value of each detection value of the feature point 290, the feature point 300, the feature point 310, and the feature point 320.

The estimation unit 413 determines, for each pole pair number of the rotor 21, whether or not the pattern of the magnitude relationship of the absolute values of each learning values of the maximum value and the minimum value coincides with the pattern of the magnitude relationship of the absolute values of the detection values of the feature point 140 and the feature point 150.

The estimation unit 413 determines, for each pole pair number of the rotor 21, whether or not the pattern of the magnitude relationship of the absolute values of the learning values of the three intersection points coincides with the pattern of the magnitude relationship of the absolute values of the detection values of the feature point 230, the feature point 240, and the feature point 250.

The estimation unit 413 determines, for each pole pair number of the rotor 21, whether or not the pattern of the magnitude relationship of the absolute values of the learning values of the reference line 50 and the four feature points corresponding to each waveform coincides with the pattern of the magnitude relationship of the absolute values of the detection values of the feature point 270, the feature point 280, the feature points 290, and the feature points 300.

The estimation unit 413 acquires, for each pole pair number, a cumulative error between each detection value and each learning value. The estimation unit 413 substitutes one pole pair number of the minimum cumulative error into one variable representing the correct pole pair number.
The estimation unit 413 may acquire the pole pair number of the smallest error point from among each pole pair number. The estimation unit 413 may substitute one pole pair number of the smallest error point into one variable representing the correct pole pair number.

As described above, the position estimation device 4 of the third embodiment includes the estimation unit 413. The estimation unit 413 determines, for each pole pair number of the rotor 21, whether or not the pattern of the magnitude relationship of the absolute values of the learning values of the reference line 50 and the four or more feature points corresponding to each waveform coincides with the pattern of the magnitude relationship of the absolute values of the detection values of the four or more feature points. The estimation unit 413 estimates the pole pair number with which the pattern of the magnitude relationship coincides as the rotation position of the rotor 21.

Due to this, the position estimation device 4 of the third embodiment can further improve the accuracy of estimating the rotation position of the rotor 21 even if the rotor angle is equal to or less than "1/8 (mechanical angle)".

After executing the position estimation method shown in the first embodiment, the position estimation device 4 of the third embodiment may execute the position estimation method shown in the third embodiment by succeeding the parameter value of the position estimation result. After executing the position estimation method shown in the third embodiment, the position estimation device 4 of the third embodiment may execute the position estimation method shown in Patent Literature 1 by succeeding the parameter value of the position estimation result.

The embodiments of this disclosure have been described in detail with reference to the drawings, but the specific configuration is not limited to the embodiments, and the design and the like within a scope not departing from the gist of this disclosure are also included.

In the design of the motor 2, the accuracy of the mounting positions of the sensor 220-U, the sensor 220-V, and the sensor 220-W may be designed to vary intentionally. Due to this, the amplitudes and the like of each waveform of the U-phase signal Hu, the V-phase signal Hv, and the W-phase signal Hw have different values from each other, thereby improving the discriminability of the waveform. Due to the improvement of discriminability of the waveform, the position estimation device 4 can further improve the accuracy of estimating the rotation position of the rotor 21 of the mass-produced motor 2.

Note that the procedure of each processing may be performed by recording a program for implementing the function of the position estimation device in the present disclosure on a computer-readable recording medium not illustrated, and reading, to computer system, the program recorded on the recording medium to execute the program. The "computer system" mentioned here shall include hardware such as an OS and peripheral devices. The "computer system" also includes a WWW system provided with a website provision environment (or display environment). The "computer-readable recording medium" refers to portable media such as a flexible disk, a magneto-optical disk, a ROM, and a CD-ROM, and storage devices such as a hard disk incorporated into a computer system. Furthermore, the "computer-readable recording medium" shall include those hold the program for a certain period of time such as a volatile memory (RAM) in a computer system serving as a server or a client when a program is transmitted via a network such as the Internet or a communication line such as a telephone line.

The program described above may be transmitted from a computer system in which this program is stored in a storage device or the like to another computer system via a transmission medium or by a transmission wave in the transmission medium. Here, the "transmission medium" transmitting a program refers to a medium having a function of transmitting information such as a network (communication network) such as the Internet or a communication line such as a telephone line. The program described above may be for implementing a part of the function described above. Furthermore, the program may be a so-called difference file (differential program), which can implement the above-described function in combination with a program already recorded in the computer system.

1 ··· motor unit, 2···motor, 3···amplification device, 4··· position estimation device, 5···control device, 6···drive device, 7···external device, 20···stator, 21···rotor, 22··· detection device, 30···differential amplifier, 40··· conversion device, 41···arithmetic unit, 42···storage device, 50···reference line, 100···sample point, 110···sample point, 120···sample point, 130···feature point, 140···feature point, 150···feature point, 160···feature point, 200···feature point, 210···feature point, 220···sensor, 230···feature point, 240··· feature point, 250···feature point, 260···feature point, 270··· feature point, 280···feature point, 290···feature point, 300··· feature point, 310···feature point, 320···feature point, 400··· converter, 410···switch unit, 411···correction unit, 412··· feature amount calculation unit, 413···estimation unit, 500 ···feature point

**Claims**

1. A position estimation device that acquires detection values of a magnetic field strength at three or more places of a rotor in accordance with a rotor angle in a range where the rotor angle is less than one rotation, the position estimation device **characterized by** comprising:

   a feature amount calculation unit that calculates a plurality of feature amounts of a waveform of the magnetic field strength based on a detection value of the magnetic field strength; and
   an estimation unit that determines, for each pole pair number of the rotor, whether or not a pattern of a magnitude relationship of the plurality of feature amounts learned in advance coincides with a pattern of a magnitude relationship of the plurality of feature amounts calculated, and estimates, as a rotation position of the rotor, the pole pair number with which a pattern of the magnitude relationship coincides.

2. The position estimation device according to claim 1, **characterized in that** the plurality of feature amounts are an absolute value of a detection value of each intersection point of a waveform of the magnetic field strength and an absolute value of a detection value of a maximum value or a minimum value of a waveform of the magnetic field strength.

**3.** The position estimation device according to claim 2, **characterized in that** when positive/negative of at least one of detection values of the magnetic field strengths changes, the feature amount calculation unit calculates an absolute value of a detection value of a maximum value or a minimum value of a waveform of the magnetic field strength.

**4.** The position estimation device according to any one of claims 1 to 3, **characterized in that** the estimation unit estimates, as a rotation position of the rotor, the pole pair number with which a difference between the plurality of feature amounts learned in advance and the plurality of feature amounts calculated becomes minimum.

**5.** The position estimation device according to any one of claims 1 to 4, **characterized in that** the feature amount calculation unit calculates the plurality of feature amounts by multiplying a detection value of the magnetic field strength by a magnification.

**6.** A position estimation method executed by a position estimation device comprising the steps of:

acquiring detection values of a magnetic field strength at three or more places of a rotor in accordance with a rotor angle in a range where the rotor angle is less than one rotation, and calculating a plurality of feature amounts of a waveform of the magnetic field strength based on a detection value of the magnetic field strength; and

determining, for each pole pair number of the rotor, whether or not a pattern of a magnitude relationship of the plurality of feature amounts learned in advance coincides with a pattern of a magnitude relationship of the plurality of feature amounts calculated, and estimating, as a rotation position of the rotor, the pole pair number with which a pattern of the magnitude relationship coincides.

FIG. 1

| POLE PAIR NUMBER | 0 | | | 1 | | | 2 | | | 3 | | |
|---|---|---|---|---|---|---|---|---|---|---|---|---|
| SECTION | 0 | ⋯ | 11 | 0 | ⋯ | 11 | 0 | ⋯ | 11 | 0 | ⋯ | 11 |
| SEGMENT | 0 | ⋯ | 11 | 12 | ⋯ | 23 | 24 | ⋯ | 35 | 36 | ⋯ | 47 |

FIG. 2

FIG. 3

FIG. 4

FIG. 5

INTERSECTION POINT CALCULATION

Hu: HALL SENSOR U-PHASE SIGNAL
(Hv: V-PHASE, Hw: W-PHASE)
kT: SAMPLING POSITION

~S101

ACQUIRE DETECTION VALUE
$\mathrm{Hu[kT], Hv[kT], HW[kT]}$

~S102

SECTION :0~11

CALCULATE SECTION BASED ON
DETECTION VALUE

~S103

INITIAL VALUE $\mathrm{Np\_tmp=0}$

PROCESSING 1
CALCULATE TENTATIVE SEGMENT NUMBER Nseg
$\mathrm{Nseg=Np\_tmp \times Section}$

~S104

CHANGE SENSOR SIGNAL USED TO CALCULATE
FIRST INTERSECTION POINT AND SECOND
INTERSECTION POINT DEPENDING ON
SECTION
OBTAIN DOUBLED VALUE OF FIRST
INTERSECTION POINT AND SECOND
INTERSECTION POINT FOR PREVENTING LOSS
OF SIGNIFICANCE

PROCESSING 2
CALCULATE DETECTION VALUE OF FIRST
INTERSECTION POINT
$2 \times \mathrm{Est\_CP[Nseg]=(Hw[kT]+Hu[kT])}$

~S105

PROCESSING 3
DETECTION VALUE OF SECOND
$2 \times \mathrm{Est\_CP[Nseg+1]=(Hv[kT]+Hw[kT])}$

~S106

READ INTERSECTION POINT LEARNING VALUE
OF SAME SEGMENT POSITION
INTERSECTION POINT LEARNING VALUE 1:
$2 \times \mathrm{Stu\_CP[Nseg]}$
INTERSECTION POINT LEARNING VALUE 2:
$2 \times \mathrm{Stu\_CP[Nseg+1]}$

①

FIG. 6

MAGNITUDE COMPARISON BETWEEN OF
INTERSECTION POINT ESTIMATION VALUE AND
INTERSECTION POINT LEARNING VALUE

S107

PROCESSING 4
MAGNITUDE RELATIONSHIP OF VALUE
INTERSECTION POINT OF ESTIMATION
AND LEARNING VALUE COINCIDE

TRUE                                                FALSE

S108

PROCESSING 5
SET FIRST INTERSECTION POINT TO
CUMULATIVE ERROR
$TotalDiff[Np\_tmp]+ =(2 \times Est\_CP[Nseg]-2 \times Stu\_CP[Nseg])$

S110

INCREMENT AS ERROR POINT
$ErrorPoint[Np\_tmp]++$

S109

PROCESSING 5
SET SECOND INTERSECTION POINT TO
CUMULATIVE ERROR
$TotalDiff[Np\_tmp]+ =(2 \times Est\_CP[Nseg+1]-2 \times Stu\_CP[Nseg+1])$

2

FIG. 7

⨀ 2

S111

NUMBER OF TIMES OF EXECUTION
OF MAGNITUDE COMPARISON

S112

PROCESSING 6
HAS MAGNITUDE COMPARISON
BEEN EXECUTED FOR SET NUMBER
OF TIMES?

TRUE          FALSE

SHIFT Np_tmp TO
NEXT POLE PAIR
NUMBER AND
RETURN TO START

CALCULATE POLE PAIR
NUMBER

S114

NUMBER WITH WHICH
ERROR POINT IS MINIMUM MIN
(ErrorPoint[Np_tmp])?

1

S113

Np_tmp++

MORE THAN 1

S115

DETERMINE TotalDiff[Np_tmp]
WITH MINIMUM CUMULATIVE ERROR

S116

PROCESSING 7
SET MINIMUM TENTATIVE POLE PAIR
NUMBER AS FORMAL POLE PAIR NUMBER

Np=Np_tmp

FIG. 8

23

FIG. 9

FIG. 10

| POLE PAIR NUMBER | max | min |
|:---:|:---:|:---:|
| 0 | 7689 | 7362 |
| 1 | 7940 | 7672 |
| 2 | 7304 | 7709 |
| 3 | 7070 | 7417 |

FIG. 11

| POLE PAIR NUMBER | FIRST INTERSECTION POINT | SECOND INTERSECTION POINT | THIRD INTERSECTION POINT |
|:---:|:---:|:---:|:---:|
| 0 | 3889 | 3793 | 3867 |
| 1 | 4140 | 3674 | 3882 |
| 2 | 3615 | 3806 | 3766 |
| 3 | 3370 | 3907 | 3767 |

FIG. 12

S201

HAVE LEARNING VALUE (MAXIMUM VALUE (MAX), MINIMUM VALUE (MIN), THREE INTERSECTION POINTS BEEN SAVED?

YES

NO

S202

TO LEARNING PROCESSING

S203

IS DETECTION OF ABSOLUTE MACHINE ANGLE INCOMPLETE?

YES

NO

S204

NORMAL PROCESSING

S205

HAVE DETECTION VALUE (MAXIMUM VALUE (MAX), MINIMUM VALUE (MIN), THREE INTERSECTION POINTS BEEN ACQUIRED?

YES

NO

③

ACQUISITION OF DETECTION VALUE

S206

IS ROTATION DIRECTION CONSTANT?

YES

NO

S207

AFTER TURNING ON POWER, PASSED THROUGH ZERO CROSS AT LEAST ONCE?

YES

NO

S208

DETECT MAXIMUM VALUE (MAX), MINIMUM VALUE (MIN), AND THREE INTERSECTION POINTS → ACQUISITION OF DETECTION VALUE COMPLETED

④

⊗

FIG. 13

( 3 )

DETERMINE POLE PAIR NUMBER (COLLATE PATTERN)

_S209

COLLATE PATTERN OF DETECTED MAXIMUM VALUE (MAX), MINIMUM VALUE (MIN),
AND THREE INTERSECTION POINTS WITH PATTERN OF MAGNITUDE RELATIONSHIP OF
LEARNING VALUE OF EACH POLE PAIR NUMBER

_S210

PATTERN OF MAGNITUDE RELATIONSHIP
COINCIDE? (MIN FOR MAX, SECOND INTERSECTION
POINT FOR FIRST INTERSECTION POINT, THIRD INTERSECTION
POINT FOR FIRST INTERSECTION POINT, AND
THIRD INTERSECTION POINT FOR SECOND
INTERSECTION POINT)

YES                                                                      NO

_S211

<COINCIDENT> CALCULATE ERROR
BETWEEN EACH DETECTION VALUE
AND EACH LEARNING VALUE FOR
EACH POLE PAIR NUMBER, AND
ADD (CUMULATE) EACH ERROR

_S212

<NOT COINCIDENT>
ADD ERROR POINT
FOR EACH POLE PAIR
NUMBER

_S213

SET POLE PAIR NUMBER WITH MINIMUM
ERROR POINT AS CORRECT POLE PAIR
NUMBER

_S214

YES          ARE THERE PLURALITY          NO
OF POLE PAIR NUMBERS WITH MINIMUM
ERROR POINT?

_S215

SET POLE PAIR NUMBER WITH
MINIMUM ERROR AS CORRECT
POLE PAIR NUMBER

_S216

CALCULATE ANGLE WITH CORRECT POLE
PAIR NUMBER → COMPLETE DETECTION
OF ABSOLUTE MECHANICAL ANGLE

( 4 )

FIG. 14

FIG. 15

## INTERNATIONAL SEARCH REPORT

| | International application No. |
|---|---|
| | PCT/JP2019/041598 |

A. CLASSIFICATION OF SUBJECT MATTER
Int. Cl. H02P6/16(2016.01)i

According to International Patent Classification (IPC) or to both national classification and IPC

B. FIELDS SEARCHED

Minimum documentation searched (classification system followed by classification symbols)
Int. Cl. H02P6/16

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2016/104378 A1 (NIDEC CORP.) 30 June 2016, paragraphs [0013]-[0026], fig. 1-6 & US 2017/0343382 A1, paragraphs [0043]-[0057], fig. 1-6 & EP 3240182 A1 & KR 10-2017-0090463 A & CN 107148741 A | 1, 4-6<br>2-3 |
| A | JP 2017-143612 A (HOKUTO SEIGYO KK) 17 August 2017, entire text, all drawings (Family: none) | 1-6 |
| A | JP 2015-211593 A (NIDEC COPAL CORP.) 24 November 2015, entire text, all drawings (Family: none) | 1-6 |

☐ Further documents are listed in the continuation of Box C.        ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26.11.2019 | 10.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6233532 B
- JP 2018029469 A
- JP 2018029470 A
- JP 2018029471 A